(19) Europäisches Patentamt
European Patent Office
Office européen des brevets

(11) Veröffentlichungsnummer: **0 255 890**
**B1**

# (12) EUROPÄISCHE PATENTSCHRIFT

(45) Veröffentlichungstag der Patentschrift: **29.08.90**

(51) Int. Cl.⁵: **C09B 62/02**

(21) Anmeldenummer: **87110466.7**

(22) Anmeldetag: **20.07.87**

(54) **Verfahren zur Umsetzung von Aminen mit heterocyclischen Reaktivkomponenten.**

(30) Priorität: **30.07.86 DE 3625693**

(43) Veröffentlichungstag der Anmeldung:
**17.02.88 Patentblatt 88/7**

(45) Bekanntmachung des Hinweises auf die Patenterteilung:
**29.08.90 Patentblatt 90/35**

(84) Benannte Vertragsstaaten:
**CH DE FR GB LI**

(56) Entgegenhaltungen:
**DE-A- 3 400 411**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk(DE)**

(72) Erfinder: **Wolff, Joachim,Dr., Schlinghovener Strasse 38,**
**D-5068 Odenthal(DE)**
Erfinder: **Wolf, Karlheinz, Dr., Paul-Klee-Strasse 77,**
**D-5090 Leverkusen(DE)**
Erfinder: **Klipper, Reinhold Maria, Dr.,**
**Bismarckstrasse 13, D-5000 Köln 50(DE)**
Erfinder: **Lange, Peter Michael, Dr.,**
**Walter-Flex-Strasse 9, D-5090 Leverkusen(DE)**

**EP 0 255 890 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Umsetzung von Aminen der Formel

$$Ar(-B-NH-R)_m \quad (SO_3M)_n \qquad (I)$$

worin

M = $NH_4$, H oder Metallkation oder Rest eines gegebenenfalls oxalkylierten primären, sekundären, tertiären oder quartären Alkanolamins,

Ar = Rest der Benzol- oder Naphthalinreihe, oder Rest eines chromophoren Systems der Mono-, Dis- oder Trisazoreihe, der Anthrachinon-, Oxazin-, Formazan- oder Cu- bzw. Ni-Phthalocyaninfarbstoffreihe, der übliche Substituenten aufweisen kann,

B = direkte Bindung oder Brückenglied an en C-Atom eines aromatich-carbocyclischen oder aromatisch-heterocyclischen Rings in Ar

n = 1–4

m = 1–2

R = H, $C_1$–$C_4$-Alkyl

in wäßrigem, wäßrig-organischem oder organischem Medium mit m Mol einer Reaktivkomponente der Formel

$R_1$-X (II)

worin

X = Halogen, insbesondere F, Cl, Br

$R_1$ = heterocyclischer faserreaktiver Rest

bei pH-Werten von 2 bis 12, vorzugsweise 4 bis 10, unter Verwendung äquimolarer Mengen säurebindender Mittel, dadurch gekennzeichnet, daß mindestens m/2-m Mol des säurebindenden Mittels in Form eines Zeoliths und/oder eines organischen Anionenaustauschers vorliegen.

Aus der DE-A 34 00 411 (vgl. Seite 7) ist zwar schon eine derartige Acylierungsreaktion in Gegenwart von Anionenaustauschen bekannt, jedoch werden dort diese Hilfsmittel nur als Katalysatoren – d.h. in katalytischen Mengen – und die säurebindenden Mittel in äquivalenter Menge eingesetzt.

Bevorzugte Metallkationen sind Li und Na. Geeignete Brückenglieder B sind beispielsweise $C_1$-$C_4$-Alkylen,

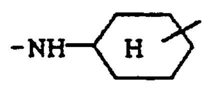 und 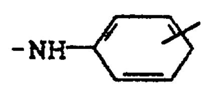

Bevorzugte Verbindungen sind beispielsweise die üblichen Kupplungskomponenten der Aminonaptholsulfosäurereihe wie 1-Oxy-6-aminonaphthalin-3-sulfosäure, 1-Oxy-8-amino-3,6-disulfosäure, 1-Oxy-8-amino-3,5-disulfosäure, ferner metallfreie und metallhaltige Monoazofarbstoffe des Typs

A-N=N-C

worin

A = Diazokomponente der Benzol- oder Naphthalinreihe die frei von Gruppen -B-NHR ist,

C = Kupplungskomponente mit Rest -B-NH-R, insbesondere solche der Aminobenzol-, Aminonaphthalin-, Aminooxynaphthalinreihe

oder metallfreie und metallhaltige Monoazofarbstoffe des Typs

$A_1$-N=N-$C_1$

worin

$A_1$ = Diazokomponente der Benzol- oder Naphthalinreihe mit Rest -B-NH-R

$C_1$ = Rest einer Kupplungskomponente die frei von Gruppen -B-NHR ist,

weiterhin Aminoanthrachinone des Typs

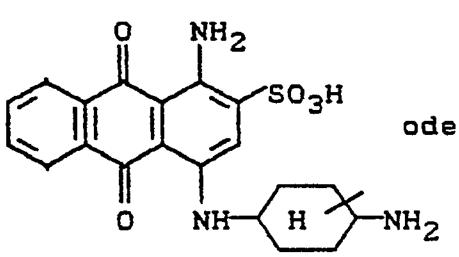 oder 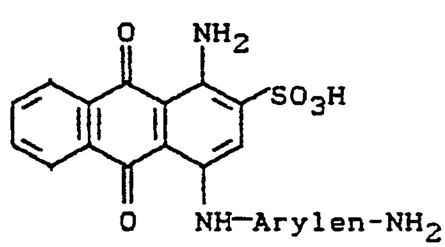

sowie Phthalocyanine des Typs

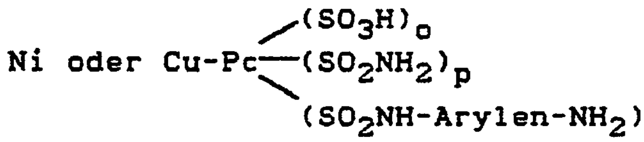

worin o, p = 1 bis 3, o + p ≦3 ist.

Beispielhaft seien folgende Verbindungen I genannt:

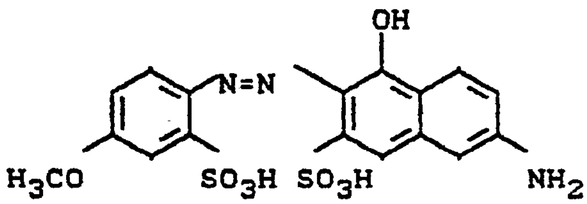

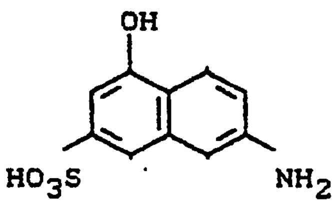

,

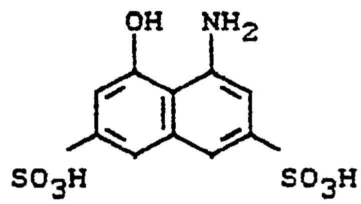

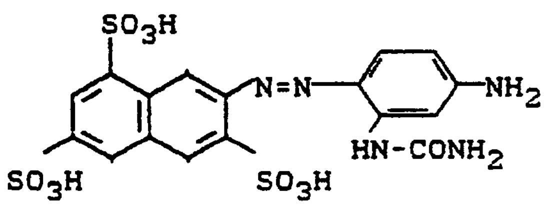

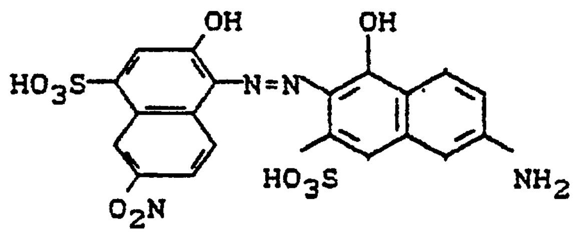

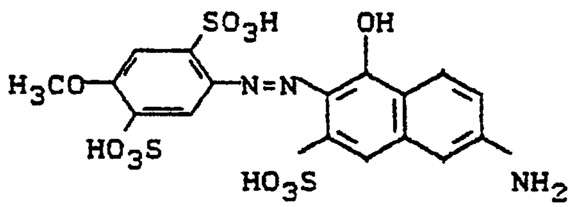

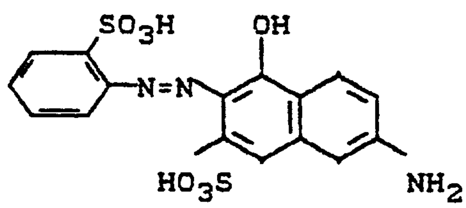

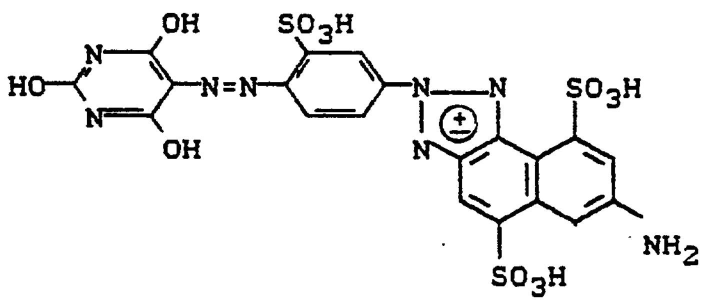

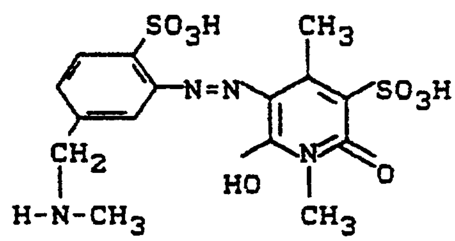

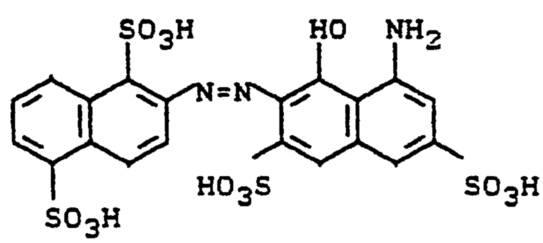

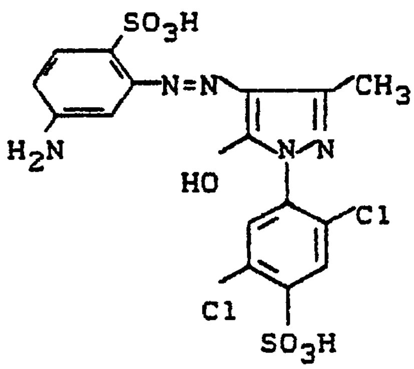

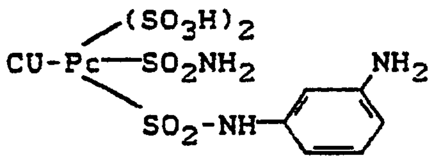

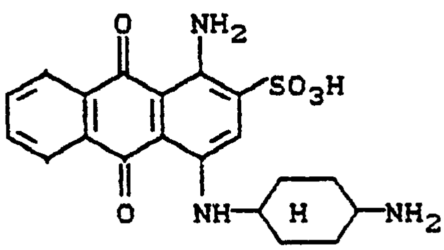

,

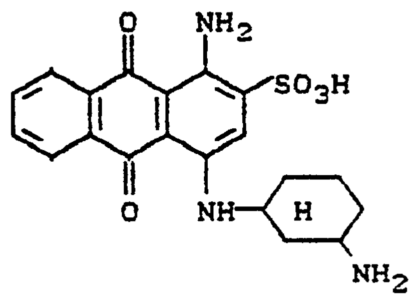

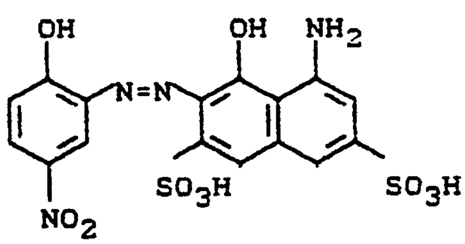

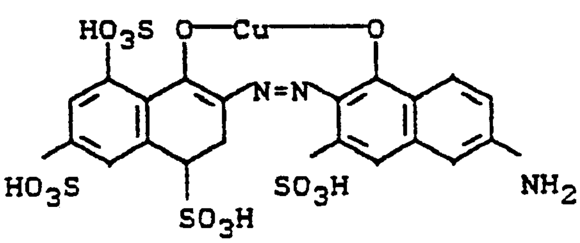

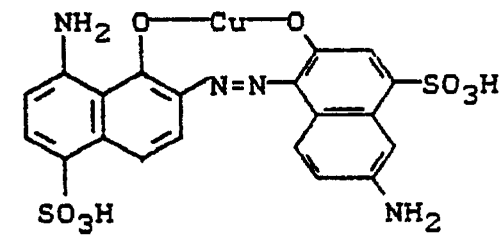

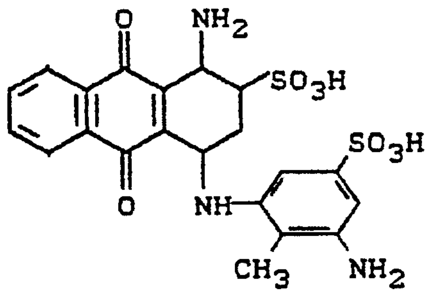

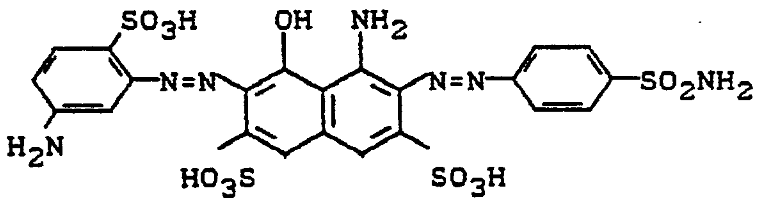

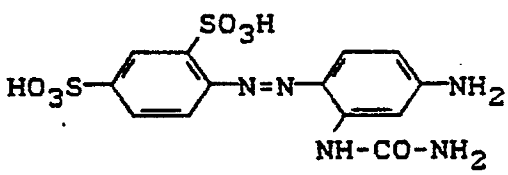

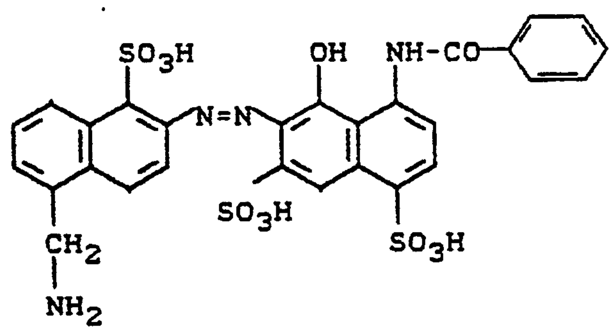

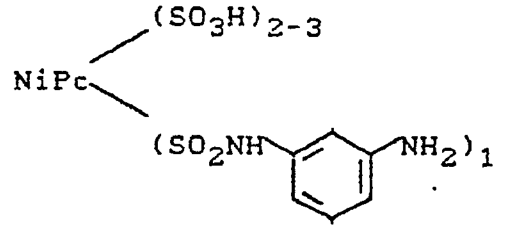 ,

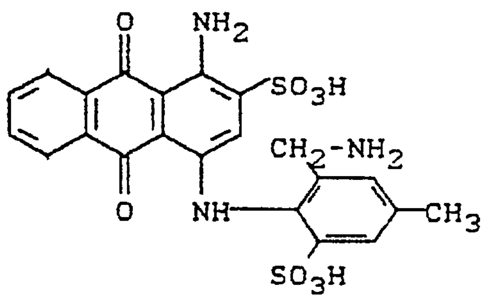

Geeignete Anionenaustauscher sind beispielsweise gelförmige und makroporöse Perlpolymerisate auf der Basis von vernetztem Polystyrol, die basische Gruppen enthalten. Als Vernetzer dienen Polyvinylverbindungen, insbesondere Divinylbenzol. Dazu gehören vernetzte Perlpolymerisate, bei denen die Benzolkerne z.B. durch $-NH_2$, $-CH_2NH_2$ oder andere Alkylaminogruppen wie

$$-CH_2N(CH_3)_2,\quad -CH_2-\overset{\oplus}{N}(CH_3)_3 \quad \text{oder auch} \quad -CH_2-\overset{\oplus}{\underset{\underset{C_2H_5OH}{|}}{N}}-(CH_3)_2$$

substituiert sind.

Ferner gehören dazu Perlpolymerisate der genannten Basis, die gleichzeitig mehrere der genannten Funktionen enthalten, z.B. eine tertiäre Aminogruppe wie

$$-CH_2-N-(CH_3)_2 \text{ und eine quartiäre Gruppe wie}$$
$$-CH_2-\overset{\oplus}{N}(CH_3)_3.$$

Weitere Perlpolymerisate mit basischen Eigenschaften sind solche, die man erhält indem chlormethylierte, vernetzte Polystyrolperlpolymerisate (wobei die Benzolkerne durch $-CH_2Cl$-Gruppen substituiert sind) mit Aminen umgesetzt werden. Als Amine werden z.B. $NH_3$, $H-N-(CH_3)_2$, $N(CH_3)$ oder auch Polyamine wie Ethylendiamin, Diethylentriamin eingesetzt. Als Vernetzer dienen die obengenannten Verbindungen. Basische Perlpolymerisate mit Aminogruppen können durch nachfolgende Umsetzungen in Harze anderer Basizität umgewandelt werden. So können z.B. in ein vernetztes Polystyrolperlpolymerisat, das Polyamingruppen enthält durch Umsetzung mit Formaldehyd und Ameisensäure im sauren Medium nach Leuckart-Wallach tertiäre Aminogruppen einführen.

Geeignete Ionenaustauscher mit basischen Gruppen sind beispielsweise solche, die man durch Aminolyse von Perlpolymerisaten auf der Basis von vernetzten Acrylverbindungen wie z.B. Acrylsäuremethylester, Methacrylsäuremethylester, Acrylnitril oder Methacrylnitril erhält.

Als Vernetzer dienen Polyvinylverbindungen wie Divinylbenzol, Ethylenglykoldimethacrylat, Trivinylbenzol, Diethylenglykoldivinylether, Hexadien-1,5, alleine oder in Kombination. Zur Aminolyse werden Amine wie z.B. Ethylendiamin, Hexamethylendiamin, Diethylentriamin oder auch 1-Amino-3-dimethylaminopropan $H_2N-(CH_2)_3-N-(CH_3)_2$ eingesetzt.

Die aminolysierten Harze können gegebenenfalls durch Umsetzung mit Alkylhalogeniden wie Chlormethyl und/oder Halogenalkoholen wie $Cl-CH_2-CH_2-OH$ in Harze anderer Basizität überführt werden.

Geeignete Ionenaustauscher mit basischen Gruppen sind auch Harze, die durch Kondensationsreaktionen hergestellt werden:

So können Ammoniak, aliphatische Amine wie z.B. Tetraethylenpentamin oder Aminoalkohole wie Triethanolamin mit vernetzenden Substanzen wie z.B. Formaldehyd oder Dihalogeniden wie Ethylendichlorid

oder Epichlorhydrin zu Harzen mit basischen Eigenschaften kondensiert werden.

Aromatische Amine wie z.B. m-Phenylendiamin lassen sich ebenfalls mit z.B. Formaldehyd zu Harzen mit basischen Eigenschaften kondensieren. Ferner gehören dazu Kondensationsharze auf der Basis von Phenol, hergestellt durch Kondensation von z.B. Phenol, Aminen wie Diethylentriamin und Formaldehyd.

Harze mit basischen Eigenschaften werden ebenfalls erhalten, wenn Phenol-Formaldehyd Kondensationsproduckte mit Ammoniak umgesetzt werden.

Gegebenenfalls kann eine weitere Umsetzung der Aminogruppen mit Alkylhalogeniden wie Chlormethyl zu Harzen unterschiedlicher Basizität angeschlossen werden.

Daneben gibt es weitere kondensationsfähige basische Grundkörper wie Guanidin bzw. Biguanidin und seine Derivate, Harnstoff und seine Derivate oder Triazinverbindungen (z.B. 1,3,5-Triaminotriazin), die mit Kondensationsmitteln wie Aldehyden (z.B. Formaldehyd) kondensiert werden können.

Geeignete Ionenaustauscher mit basischen Gruppen sind auch Anionenaustauscher auf der Basis von Polyethylenimin, hergestellt durch Kondensation von z.B. Epichlorhydrin und Polyethylenimin oder solche auf Basis von Pyridin und seinen Derivaten, die z.B. mit Epichlorhydrin zu Anionenaustauschern kondensiert werden können.

Geeignete Polymerisationsharze mit basischen Eigenschaften werden beispielsweise durch Mischpolymerisation von Vinylpyridin oder Vinylchinolin mit bifunktionellen Vernetzern wie z.B. Divinylbenzol und gegebenenfalls anschließende Quaternierung mit Methylchlord hergestellt.

Die genannten Polymeren sind in der Literatur beschrieben (vgl. z.B. Ullmann, 4. Auflage, 1977, Band 13, Seite 279 ff. Griessbach, Robert; Austauschadsorption in Theorie und Praxis, Akademie Verlag Berlin, 1957, Seite 42 ff.

Geeignete Verbindungen II sind beispielsweise Halogentriazine, Halogenpyrimidine, Halogenpyridazine, Chinolinderivate, Pyridazon-Verbindungen, Halogenchinoxaline, Halogenphthalazine, Halogenchinazoline, Benzthiazolverbindungen, Benzoxazol-Derivate und andere.

Aus der großen Zahl der zur Verfügung stehenden Verbindungen seien hier auszugsweise erwähnt: Trihalogen-symmetrische-triazine, wie Cyanurchlorid und Cyanurbromid, Dihalogen-monoamino- und monosubstituierte-aminosymmetrische triazine, wie 2,6-Dichlor-4-aminotriazin, 2,6-Dichlor-4-methylaminotriazin, 2,6-Dichlor-4-ethylaminotriazin, 2,6-Dichlor-4-oxethylaminotriazin, 2,6-Dichlor-4-phenylaminotriazin, 2,6-Dichlor-4-(o-, m- oder p-sulfophenyl)-aminotriazin, 2,6-Dichlor-4-(2′, 3′, 2′, 4′- oder - 3′,5′-disulfophenyl)-aminotriazin, Dihalogen-alkoxy- und aryloxy-symmetrische-triazine, wie 2,6-Dichlor-4-methoxytriazin, 2,6-Dichlor-4-ethoxytriazin, 2,6-Dichlor-4-phenoxytriazin, 2,6-Dichlor-4-(o-, m- oder p-sulfophenyl)-oxytriazin, Dihalogen-alkylmercapto- und -arylmercapto symmetrische-triazine, wie 2,6-Dichlor-4-ethylmercapto-triazin, 2,6-4-phenylmercaptotriazin, 2,6-Dichlor-4-(p-methylphenyl)-mercaptotriazin, 2,4,6-Trifluortriazin, 2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2′,5′-disulfophenyl)-amino-triazin, 2,4-Difluor-6-(6′-sulfonaphthyl-2′)-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2′-methyl-5′-sulfophenyl)-amino-triazin, 2,4-Difluor-6-(2′-methyl-4′-sulfophenyl)-amino-triazin, 2,4-Difluor-6-(2′-chlor-4′-sulfophenyl)-amino-triazin, 2,4-Difluor-6-(2′-chlor-5′-sulfophenyl)-amino-triazin, 2,4-Difluor-6-(2′-methoxy-4′-sulfophenyl)-amino-triazin, 2,4-Difluor-6-(o-, m-, p-carboxyphenyl)-amino-triazin, 2,4-Difluor-6-(N-methyl-phenyl)-amino-triazin, 2,4-Difluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzylamino-triazin, 2,4-Difluor-6-β-phenylethyl-amino-triazin, 2,4-Difluor-6-(X-sulfo-benzyl)-amino-triazin, 2,4-Difluor-6-(2′,4′-disulfophenyl)-amino-triazin, 2,4-Difluor-6-(3′,5′-disulfophenyl)-amino-triazin, 2,4-Difluor-6-(2′-carboxy-4′-sulfo-phenyl)-amino-triazin, 2,4-Difluor-6-(2′,5′-disulfo-4-methoxyphenyl)-amino-triazin, 2,4-Difluor-6-(2′-methyl-4′,6′-disulfophenyl)-amino-triazin, 2,4-Difluor-(6′,8′-disulfonaphthyl-(2′))-amino-triazin, 2,4-Difluor-(4′,8′-disulfonaphthyl-(2′))-amino-triazin, 2,4-Difluor-(4′,6′,8′-trisulfo-naphthyl-(2′))-amino-triazin, 2,4-Difluor-(3′,6′,8′-trisulfonahthyl-(2′))-amino-triazin, 2,4-Difluor-(3′,6′-disulfonaphthyl-1′))-amino-triazin, 2,4-Difluor-6-amino-triazin, 2,4-Difluor-6-methylamino-triazin, 2,4-Difluor-6-ethylamino-triazin, 2,4-Difluor-6-methoxy-triazin, 2,4-Difluor-6-methoxyethylamino-triazin, 2,4-Difluor-6-dimethylamino-triazin, 2,4-Difluor-6-diethylamino-triazin, 2,4-Difluor-6-isopropylamino-triazin, Tetrahalogenpyridmidine wie Tetrachlor-, Tetrabrom- oder Tetrafluor-pyrimidin, 2,4,6-Trihalogenpyrimidine, wie 2,4,6-Trichlor-, Tribrom- oder Trifluor-pyrimidin, Dihalogenpyrimidine, wie 2,4-Dichlor-, -Dibrom- oder -Difluorpyrimidin; 2,4,6-Trichlor-5-nitro- oder -5-methyl- oder -5-carbomethoxy- oder -5-carboethoxy- oder -5-carboxymethyl- oder -5- mono-, -di- oder trichlormethyl-oder -5-carboxy- oder -5-sulfo-oder -5-cyano- oder -5-vinyl-pyrimidin, 2,4-Difluor-6-methylpyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor-oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,6-Trifluor-5-methylpyrimidin, 2,4,5-Trifluor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-carbon-amido-pyrimidin, 2,4-Difluor-5-carbomethoxy-pyrimidin, 2,4-Difluor-6-trifluormethylpyrimidin, 2,4-Difluor-6-carbomethoxy-pyrimidin, 2,4-Difluor-6-phenyl-pyrimidin, 2,4-Difluor-6-cyanpyrimidin, 2,4,6-Trifluor-5-methylsulfonyl-pyrimidin, 2,4-Difluor-5-sulfonamido-pyrimidin, 2,4-Difluor-5-chlor-6-carbomethoxy-pyrimidin, 5-Trifluormethyl-2,4-difluorpyrimidin, 2,4-Dichlorpyrimidin- 5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid; Pyrimidin-Reaktivkompenenten mit abspaltbaren Sulfonylgruppen, wie 2-Carboxymethylsulfonyl-4-chlorpyrimidin, 2-Methylsulfonyl-4-chlor-6-methylpyrimidin, 2,4-Bis-methyl-sulfonyl-6-methylpyrimidin, 2,4-Bis-phenylsulfonyl-5-chlor-6-methylpyrimidin, 2,4,6-Trismethylsulfonylpyrimidin, 2,6-Bis-methylsulfonyl-4,5-dichlorpyrimidin, 2,4-Bis-methylsulfonylpyrimidin-5-sulfonsäurechlorid, 2-Methylsulfonyl-4-chlorpyrimidin, 2-Phenylsulfonyl-4-chlorpyrimidin, 2,4-Bis-trichlormethylsulfonyl-6-methylpyrimidin, 2,4-Bis-methylsulfonyl-5-chlor-6-methylpyrimidin, 2,4-Bis-methylsulfonyl-5-brom-6-methylpyrimidin, 2-Methylsulfonyl-4,5-dichlor-6-methylpyrimidin, 2-Methylsulfonyl-4,5-dichlor-6-chlormethylpyrimidin, 2-Methylsulfonyl-4-chlor-6-methylpyrimidin-5-sulfonsäurechlorid, 2-Methylsulfonyl-4-chlor-5-nitro-6-methylpyrimidin, 2,4,5,6-Tetramethylsulfonyl-pyrimidin, 2-Methylsulfonyl-4-chlor-5,6-dimethylpyrimidin, 2-Ethylsulfonyl-4,5-dichlor-6-methylpyrimidin, 2-Methylsulfonyl-4,6-dichlorpyrimidin, 2,4,6-Tris-methylsulfonyl-5-chlorpyrimidin, 2-Methylsulfonyl-4-chlor-6-carboxypyrimidin, 2-Methylsulfonyl-4-chlorpyrimidin-5-sulfonsäure, 2-Methylsulfonyl-4-chlor-6-carbomethoxypyrimidin, 2-Methylsulfonyl-4-chlor-pyrimidin-5-carbonsäure, 2-Methylsulfonyl-4-chlor-5-cyan-6-methoxypyrimidin, 2-Methylsulfonyl-4,5-dichlorpyrimidin, 4,6-Bis-methylsulfonylpyrimidin, 4-Methylsulfonyl-6-chlorpyrimidin, 2-Sulfoethylsulfonyl-4- chlor-6-methylpyrimidin, 2-Methylsulfonyl-4-chlor-5-brompyrimidin, 2-Methylsulfonyl-4-chlor-5-brom-6-methylpyrimidin, 2,4-Bis-methylsulfonyl-5-chlorpyrimidin, 2-Phenylsulfonyl-4,5-dichlorpyrimidin, 2-Phenylsulfonyl-4,5-dichlor-6-methylpyrimidin, 2-Carboxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-Bis-(2' oder 3' oder 4'-Carboxyphenylsulfonyl)-5-chlor-6-methylpyrimidin, 2-Methylsulfonyl-6-chlorpyrimidin-4- oder -5-carbonsäurechlorid, 2-Ethylsulfonyl-6-chlorpyrimidin-4-oder -5-carbonsäurechlorid, 2,6-Bis-(methylsulfonyl)-pyrimidin-4-carbonsäurechlorid, 2-Methylsulfonyl-6-methyl-4-chlor-oder -4-brompyrimidin-5-carbonsäurechlorid oder -bromid, 2,6-Bis-(methylsulfonyl)-4-chlorpyrimidin-5-carbonsäurechlorid; weitere Reaktivkomponenten der heterocyclischen Reihe mit reaktiven Sulfonylsubstituenten sind beispielsweise 3,6-Bis-phenylsulfonyl-pyridazin, 3-Methylsulfonyl-6-chlorpyridazin, 3,6-Bis-trichlormethylsulfonylpyridazin, 3,6-Bis-methylsulfonyl-4-methylpyridazin, 2,5,6-Tris-methylsulfonylpyrazin, 2,4-Bis-methylsulfonyl-1,3,5-triazin, 2,4-Bis-methylsulfonyl-6-(3'-sulfophenylamino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichlorethoxy-1,3,5-triazin, 2,4,6-Trisphenylsulfonyl-1,3,5-triazin, 2,4-Bis-methylsulfonylchinazolin, 2,4-Bis-trichlormethylsulfonylchinolin, 2,4-Bis-carboxymethylsulfonylchinolin, 2,6-Bis-(methylsulfonyl)-pyridin-4-carbonsäurechlorid und 1-(4'-Chlorcarbonylphenyl oder 2'-chlorcarbonylethyl)-4,5-bis-methylsulfonyl-pyridazin-(6); weitere heterocyclische Reaktivkomponenten mit beweglichem Halogen sind unter anderem 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,3-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -7-sulfonsäurechlorid sowie die entsprechenden Bromverbindungen, 2-oder 3- oder 4-(4'-, 5'-Dichlorpyridazin-6'-yl-1')-phenylsulfonsäurechlorid oder -carbonsäurechlorid sowie die entsprechenden Bromverbindungen, β-(4',5'-Dichlorpyridazon-6'-yl-1')-ethylcarbonsäurechlorid, 2-Chlorchinoxalin-3-carbonsäurechlorid und die entsprechenden Bromverbindungen, N-Methyl-N-(2,4-dichlortriazinyl-6)-carbamidsäurechlorid, N-Methyl-N-(2-chlor-4-methyl-amino-triazinyl-6)-carbamidsäurechlorid, N-Methyl-N-(2-chlor-4-dimethylamino-triazinyl-6)-carbamidsäurechlorid, N-Methyl- oder N-Ethyl-N-(2,4-dichlortriazinyl-6)-aminoacetylchlorid, N-Methyl-, N-Ethyl- oder N-Hydroxyethyl-N-(2,3-dichlorchinoxalin-6-sulfonyl-oder -6-carbonyl)-aminoacetylchlorid und die entsprechenden Bromderivate, ferner 2-Chlorbenzthiazol-5- oder -6-carbonsäurechlorid oder -5- -6-sulfonsäurechlorid und die entsprechenden Bromverbindungen, 2-Arylsulfonyl- oder 2-Alkylsulfonyl-benzthiazol-5- oder -6-carbonsäurechlorid oder -5-oder -6-sulfonsäurechlorid, wie 2-Methylsulfonyl- oder 2-Ethylsulfonyl- oder 2-Phenylsul fonyl-benzthiazol-5- oder -6-sulfonsäurechlorid oder -5-oder -6-carbonsäurechlorid sowie die entsprechenden in ankondensierten Benzolring Sulfonsäuregruppen enthaltenden 2-Sulfonylbenzthiazol-Derivate, 3,5-Bis-methylsulfonyl-iso-thiazol-4-carbonsäurechlorid, 2-Chlorbenzoxazol-5- oder -6-carbonsäurechlorid oder -sulfonsäurechlorid sowie die entsprechenden Bromderivate, 2-Chlorbenzimidazol-5-oder -6-carbonsäurechlorid oder -sulfonsäurechlorid sowie die entsprechenden Bromderivate, 2-Chlor-1-methylbenzimidazol-5- oder -6-carbonsäurechlorid oder -sulfonsäurechlorid sowie die entsprechenden Bromderivate, 2-Chlor-4-methylthiazol-(1,3)-5-carbonsäurechlorid oder -4- oder -5-sulfonsäurechlorid, 2-Chlorthiazol-4- oder -5-sulfonsäurechlorid und die entsprechenden Bromderivate.

Im Rahmen der vorliegenden Erfindung bevorzugt hergestellte Verbindungen enthalten vorzugsweise Reaktivgruppen folgender Systeme:

Mono- oder Dihalogen-symmetrische Triazinylreste, Mono-, Di- oder Trihalogenpyrimidinylreste oder halogensubstituierte Chinoxalinylcarbonylreste.

Insbesondere bevorzugt sind folgende Reaktivgruppen der Formel (4), (5) und (6)

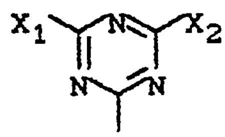

(4)

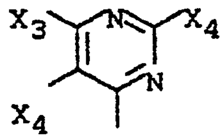

(5)

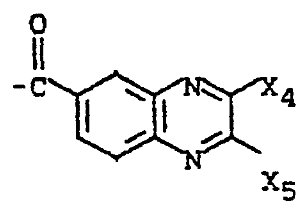

(6)

wobei in den Formeln (4), (5) und (6) gilt:

$X_1$ = F

$X_2$ = Cl, F, $NH_2$, $NHR^2$, $OR^2$, $CH_2R^2$, $SR^2$

$X_3$ = Cl, F, $CH_3$

$X_4$ = Cl, F, und

$X_5$ = Cl, F, $CH_3$

und wobei

$R^2$ = Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl), Aralkyl (insbesondere gegebenenfalls durch $SO_3H$, $C_1$-$C_4$-Alkyl, $C_1$-$C_4$-Alkoxy substituiertes Benzyl).

Derartige Reaktivkomponenten sind vielfach in der Litera tur beschrieben, beispielsweise in den folgenden Patentschriften: US-PS 3 377 336, 3 527 760, 3 669 951, GB-PS 1 169 254, 1 188 606, DE-PS 1 644 208, 2 817 780.

Geeignete säurebindende Mittel sind beispielsweise Alkalien oder alkalisch reagierende Ammoniumsalze wie LiOH, NaOH, KOH, $Ca(OH)_2$, $Na_2CO_3$, $NaHCO_3$, $Li_2CO_3$, $(NH_4)_2CO_3$, $NH_4HCO_3$.

Wird bei der Reaktion HF frei und arbeitet man in konzentrierten wäßrigen Lösungen ist es besonders vorteilhaft als säurebindende Mittel die entsprechenden Li- oder Ca-Verbindungen zu verwenden.

Das erfindungsgemäße Verfahren kann in verschiedener Weise durchgeführt werden:

1. Das säurebindende Mittel wird zusammen mit dem Amin I vorgelegt und die Reaktivkomponente anschließend zugesetzt.

2. Reaktivkomponente und säurebindendes Mittel werden gleichzeitig im Verlaufe einer bestimmten Zeitspanne zu dem vorgelegten Amin gegeben.

3. Ein Gemisch aus Amin I und Reaktivkomponente II in wäßriger, wäßrig-organischer oder organischer Lösung wird durch eine mit dem organischen polymeren säurebindenden Mittel, z.B. dem Anionenaustauscher gefüllten Säule gepumpt, gegebenenfalls im Kreislauf.

Die nach dem erfindungsgemäßen Verfahren hergestellten Verbindungen sind entweder wertvolle Zwischenverbindungen für die Synthese von Reaktivfarbstoffen oder Reaktivfarbstoffe selbst.

Die nach dem erfindungsgemäßen Verfahren entweder direkt bzw. nach Kupplung gewonnenen Reaktivfarbstoffe können auf verschiedene Art weiterverarbeitet werden. Für den Fall der festen Färbepräparate isoliert man entweder bei Raumtemperatur durch Aussalzen und Filtrieren mit anschließender Trocknung bzw. trocknet direkt die erhaltene Synthesebrühe nach eventueller Zugabe von Einstell- bzw. Entstaubungsmittel.

Die Trocknung kann z.B. in einem Umluftschrank, mit Schaufeltrockner, Walzentrockner, bevorzugt jedoch durch Sprühtrocknung mit einer Ein- oder Zweistoffdüse oder Zerstäuberscheibe erfolgen. Bei einigen Farbstoffen ist es vorteilhaft, daß man eine heiße Lösung der Komponente sprühtrocknet. Die Konzentration der Feststoffe in Wasser beträgt bei der Sprühtrocknung üblicherweise 10 bis 45 Gew.-%.

Die nach dem erfindungsgemäßen Verfahren hergestellten salzarmen Reaktivfarbstoffe eignen sich insbesondere für die Herstellung von Granulaten.

Als Einstellmittel kommen übliche Einstellmittel, d.h. feste Verbindungen in Frage, die keine Reaktion mit der Reaktivgruppe eingehen, wie z.B. Polyphosphate, vorzugsweise aber Nichtelektrolyte wie Polyvinylpyrrolidon, Harnstoff, Salze wasserlöslicher aromatischer Sulfonsäuren wie Benzolsulfonsäure und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxyaddukte, sulfatierte partiell veresterte mehrwertige Alkohole, vor allem Sulfonate, wie langkettige Alkysulfonate, beispielsweise Laurylsulfonat, Cethylsulfonate, Stearylsulfonate, Mersolate, Natriumdialkylsulfosuccinate, wie Natriumdioctysulfosuccinat, Tauride, beispielsweise Oleylmethyltaurid (Natriumsalz), Alkylarylsulfonate, wie Alkylbenzolsulfonate mit geradkettiger oder verzweigter Alkylkette mit 7 bis 20 Kohlenstoffatomen der Mono- oder Dialkylnaphthalinsulfonat, wie Nonylbenzolsufonate, Dodecylbenzolsulfonate und Hexadecylbenzolsulfonate, sowie 1 Isopropyl-naphthalin-2-sulfonat, Di-iso-propylnaphthalinsulfonat und insbesondere Kondensationsprodukte, aus aromatischen Sulfonsäuren und Formaldehyd wie Naphthalinsulfonsäure, Ditolylethersulfonsäuren oder Terphenylsulfonsäuren mit Formaldehyd und/oder Kondensationsprodukte aus Cyclohexanon, Formaldehyd und Bisulfit und/oder Ligninsulfonate. Weiterhin können noch übliche Entstaubungsmittel wie Öle, Öl/Emulgator-Mischungen oder Phthalsäureester zugesetzt werden.

Die nach dem erfindungsgemäßen Verfahren hergestellten salzarmen festen Präparationen der Reaktivfarbstoffe haben vorzugsweise folgende Zusammensetzung:

Der Reaktivfarbstoffgehalt in der erfindungsgemäß hergestellten Präparation liegt bei 20 bis 90 Gew.-% (bevorzugt 30 bis 80 Gew.-%); außerdem enthält die Einstellung bis zu 20 Gew.-%, bevorzugt ≦10 Gew.-% Salz, bis zu 5 Gew.-% Puffersubstanzen für den pH-Wert 6,5 bis 8,5, weiterhin gegebenenfalls 10 bis 70 % eines konzentrationserhöhenden Zusatzstoffes, 0 bis 50 % der üblichen Einstellmittel sowie bis zu 4 % Entstaubungsmittel.

Als gegebenenfalls zugesetzte Puffersubstanzen kommen vorzugsweise solche infrage, die im Bereich pH 6,5 bis 9 puffern. Beispielhaft seien die folgenden Puffersysteme genannt:

1. Monokaliumdihydrogenphosphat/Dikaliumhydrogenphosphat-Mischungen
2. Borsäure mit Alkalihydroxid auf pH 7 bis 8,5 gestellt
3. Citronensäure mit Alkalihydroxid auf pH 6 bis 8 gestellt
4. $HCO_3^-$/-Mischungen auf pH 7 bis 8,5 gestellt bzw. Mischungen der Puffer 1 bis 4.

Nach dem erfindungsgemäßen Verfahren lassen sich auch direkte gebrauchsfertige Flüssigpräparationen, insbesondere konzentrierte wäßrige bzw. wäßrig-organische Lösungen herstellen.

Der Reaktivfarbstoffgehalt in solchen Flüssigpräparationen liegt bei 8 bis 40 Gew.-% (bevorzugt 10 bis 30 Gew.-%) außerdem enthält die Flüssigeinstellung bis zu 2 Gew.-% Puffersubstanzen für den pH-Wert 6,5 bis 8,5, bevorzugt 0,5 bis 1 Gew.-% Puffer, gegebenenfalls bis zu 30 Gew.-% eines konzentrationserhöhenden Zusatzstoffes, sowie bis zu 10 Gew.-% Alkalisalze, bevorzugt ≦6 Gew.-% Lithiumsalze. Insbesondere bevorzugt sind die Flüssigeinstellungen.

Als konzentrationserhöhende Zusatzstoffe können beispielsweise Verwendung finden: cyclische Ether wie Tetrahydrofuran, Ethylencarbonat, Propylencarbonat und/oder niedere aliphatische oder cyclische Amide, wie ε-Caprolactam oder N-Alkyl-pyrrolidone, N-Vinylpyrrolidone und deren Polymere und/oder aliphatische Sulfoxide und/oder schwefelhaltige Verbindungen wie Dimethylsulfon, Diethylsulfon und/oder hydrotrope Verbindungen wie Thioharnstoff, Harnstoff, sowie die dazu gehörigen Derivate, besonders bevorzugt sind N' N-Dimethylharnstoff, ε-Caprolactam und Dimethylsulfon.

Die nach dem erfindungsgemäßen Verfahren hergestellten Farbstoffe bzw. Farbstoffpräparationen finden Verwendung für die Zubereitung von Färbebädern und Druckpasten für das Färben bzw. Bedrucken von cellulosehaltigen Substraten wie Baumwolle, Papier sowie von Wolle und Leder.

Die Umsetzung von Reaktivkomponenten der Formel (II) mit Aminen der Formel (I) in wäßrigem Medium ist bereits bekannt und vielfach beschrieben. Üblicherweise wird dabei die bei der Reaktion freiwerdende Säure HX durch Zugabe von wasserlöslichen Alkalien neutralisiert bzw. gepuffert (s. EP-A-41 922, DE-A-3 023 920 A 1, EP-A-87 703). Nachteilig wirkt sich dabei oft aus, daß bei zu schneller Alkalizugabe oder bei ungenügender Durch mischung beispielsweise durch eine höhere Viskosität des Reaktionsmediums über einen erhöhten pH-Wert eine Hydrolyse der Reaktivkomponente (II) bzw. des Umsetzungsproduktes erfolgt. Aus diesem Grunde ist es oft notwendig, einen Überschuß an Reaktivkomponenten einzusetzen.

Nachteilig bei der bisherigen Verfahrensweise wirkt sich zudem aus, daß die bei der Umsetzung nach der Neutralisation enstandenen Alkalisalze die Löslichkeit z.B. der erhaltenen Reaktivfarbstoffe verringern. Hochkonzentrierte Farbstofflösungen mit den z.B. in der DE-OS 2 529 657 beschriebenen anwendungstechnischen Vorteilen sind dann oft ohne zusätzliche Manipulationen nicht direkt herzustellen.

Es hat sich nun im hohen Maße überraschend gezeigt, daß nach dem erfindungsgemäßen Verfahren in wäßrigen, wäßrig-organischem oder organischem Medium Umsetzungsprodukte mit hoher Reinheit und sehr guter Löslichkeit erhalten werden.

Weiterhin vorteilhaft wirkt sich aus, daß der für die Reaktion optimale pH-Wert über längere Zeit relativ unabhängig von der Zugabegeschwindigkeit der festen Base gehalten werden kann. Das neue Herstellungsverfahren z.B. für heterocyclische Reaktivfarbstoffe führt somit insbesondere in automatisch geführten Anlagen zu einer hohen Betriebssicherheit in bezug auf die Qualität der Produkte.

<u>Beispiel 1</u>

1 Mol des Farbstoffs der Formel

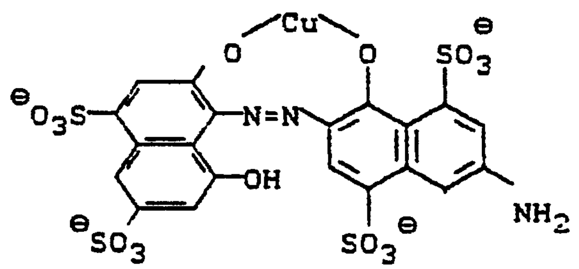

$\sim 3\ Na^+$
$\sim 1\ Li^+$

werden in 6 l Wasser und 880 g ε-Caprolactam bei 60°C bis zur fast vollständigen Lösung gerührt und nach Abkühlen auf 20°C mit 1,03 Mol 2,4,6-Trifluor-5-chlorpyrimidin umgesetzt. Während der Reaktion gibt man kontinuierlich zuerst 0,2 Mol $Li_2CO_3$ zu, anschließend ca. 600 ml eines gelförmigen stark basischen Anionenaustauschers (OH-Form) auf Basis Styrol-Divinylbenzol, enthaltend $N(CH_3)_3$-Gruppen, mit einer Totalkapazität von ca. 1,6 Mol/l.

Man erhält eine, nach Abtrennung des unlöslichen Harzes, lagerstabile praktisch salzfreie Lösung enthaltend ca. 11 Gew.-% Reaktivfarbstoff. Die Lösung kann direkt nach Zusatz der für die Reaktivfärberei üblichen Hilfsmittel zum Färben von Baumwolle in grünstichig blauem Ton benutzt werden.

<u>Beispiel 2</u>

1 Mol der sauren Farbstoffe der Formel

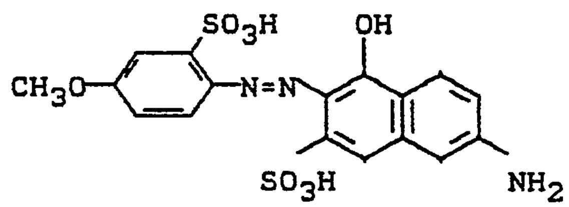

werden in 5.200 l Wasser mit $LiOH{\cdot}H_2O$ bei pH = 5 gelöst. Dazu gibt man 1,1 Mol 2,4,6-Trifluorchlorpyrimidin und 2,3 % Dicyandiamid. Das Gemisch wird 1 Stunde lang bei 10°C durch eine Säule gefüllt mit 1 l des basischen Ionenaustauschers aus Beispiel 1 gegeben. Man erhält eine lagerstabile Lösung der Reaktivfarbstoffes.

<u>Beispiel 3</u>

1 Mol des sauren Anthrachinonfarbstoffs der Formel

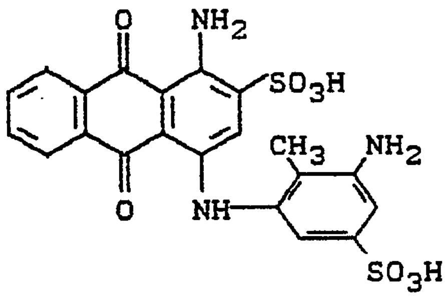

werden in 3.000 ml Wasser mit $LiOH{\bullet}H_2O$ bei pH = 5 nahezu gelöst. Dann gibt man innerhalb von 1 Stunde 1,1 Mol 2,4,6-Trifluor-5-chlorpyrimidin zu, wobei durch Zugabe von 0,3 Mol $Li_2CO_3$ und 400 ml des in Beispiel 1 beschriebenen Anionenaustauschers die Reaktion pH-kontrolliert wird. Durch Zugabe von ca. 600 g ε-Caprolactam wird der ausgefallene Reaktivfarbstoff gelöst und vom Anionenaustauscher abfiltriert. Man erhält eine stabile Lösung.

Beispiel 4

1 Mol 1-Amino-8-hydroxy-naphthalin-4,6-disulfonsärue wird in 850 ml Wasser mit $LiOH{\bullet}H_2O$ gelöst. Nach Zugabe von 1,05 Mol 2,4-Difluor-5-chlor-6-methylpyrimidin wird die Lösung 3 Stunden durch eine Säule gefüllt mit 1 l des Anionenaustauschers aus Beispiel 1 in Kreislauf gegeben. Nach beendeter Reaktion gibt man 7 Mol N'N-Dimethylharnstoff und 1 Mol diazotierte 1-Aminobenzol-2-sulfonsäure zu.

Der pH-Wert wird während der Kupplung durch Zugabe weiterer Anionenaustauscher bei 6 gehalten. Man erhält eine lagerstabile salzarme Reaktivfarbstoff-Lösung.

**Patentansprüche**

1. Verfahren zur Umsetzung von Aminen der Formel

$$\overset{\diagup(SO_3M)_n}{Ar(-B-NH-R)_m} \qquad (I)$$

worin
M = $NH_4$, H oder Metallkation oder Rest eines gegebenenfalls oxalkylierten primären, sekundären, tertiären oder quartären Alkanolamins,
Ar = Rest der Benzol- oder N7zaphthalinreihe, oder Rest eines chromophoren Systems der Mono-, Dis- oder Trisazoreihe, der Anthrachinon-, Oxazin-, Formazan- oder Cu- bzw. Ni-Phthalocyaninfarbstoffreihe, der übliche Substituenten aufweisen kann,
B = direkte Bindung oder Brückenglied an ein C-Atom eines aromatisch-carbocyclischen oder aromatisch-heterocyclischen Rings in Ar
n = 1–4
m = 1–2
R = H,$C_1$–$C_4$-Alkyl
in wäßrigem, wäßrig-organischem oder organischem Medium mit m Mol einer Reaktivkomponente der Formel
$R_1$-X (II)
worin
X = Halogen, insbesondere F, CL, Br
$R_1$ = heterocyclischer fasserreaktiver Rest
bei pH-Werten von 2 bis 12, vorzugsweise 4 bis 10, unter Verwendung äquimolarer Mengen säurebindender Mittel, dadurch gekennzeichnet, daß mindestens m/2-m Mol des säurebindenden Mittels in Form eines Zeoliths und/oder eines organischen Anionenaustauschers vorliegen.

2. Verfahren nach Anspruch 1, dadurch gekennzeichnet, daß als heterocyclische Reaktivkomponenten (II) fluorhaltige Pyrimidine bzw. fluorhaltige Triazine Verwendung finden.

3. Verfahren gemäß Ansprüchen 1–2, dadurch gekennzeichnet, daß als säurebindende Mittel zusätzlich basische Lithiumverbindungen Verwendung finden.

4. Herstellung wäßriger Lösungen enthaltend 8–40 Gew.-% Verbindung (I) nach dem Verfahren der Ansprüche 1–3.

**Claims**

1. Process for the reaction of amines of the formula

$$\underset{\diagup (SO_3M)_n}{Ar(-B-NH-R)_m} \quad (I)$$

in which
M is $NH_4$, H or a metal cation or a radical of a primary, secondary, tertiary or quaternary alkanolamine which may be alkoxylated,
Ar is a radical of the benzene or naphthalene series or a radical of a chromophor system of the monoazo, disazo or trisazo series, the anthraquinone, oxazine, formazan or Cu or Ni phthalocyanine dye series, which can have customary substituents,
B is a direct bond or a bridge member to a carbon atom of an aromatic-carbocyclic or aromatic-heterocyclic ring in Ar,
n is 1–4,
m is 1–2,
R is H, $C_1$–$C_4$-alkyl
in aqueous, aqueous-organic or organic medium with m mole of a reactive component of the formula
$R_1$-X (II)
in which
X is halogen, in particular F, Cl, Br,
$R_1$ is a heterocyclic fibre-reactive radical
at pH values of 2 to 12, preferably 4 to 10, with the use of equimolar amounts of acid-binding agents, characterized in that at least m/2-m mole of the acid-binding agent in the form of a zeolite and/or an organic anion-exchanger are present.

2. Process according to Claim 1, characterized in that fluorine-containing pyrimidines or fluorine-containing triazines are used as heterocyclic reactive components (II).

3. Process according to Claims 1–2, characterized in that basic lithium compounds are additionally used as acid-binding agents.

4. Preparation of aqueous solutions containing 8–40% by weight of compound (I) by the process of Claims 1–3.

**Revendications**

1. Procédé pour la réaction d'amines de formule

$$\underset{\diagup (SO_3M)_n}{Ar(-B-NH-R)_m} \quad (I)$$

dans laquelle
M = $NH_4$, H ou un cation métallique ou un reste d'une alcanolamine primaire, secondaire, tertiaire ou quaternaire éventuellement hydroxyalkylée,
Ar est un reste de la série benzénique ou naphtalénique ou le reste d'un système chromophore de la série mono-, bis- ou tris-azoïque, de la série anthraquinonique, de la série de l'oxazine, de la série du formazane ou de la série des colorants de Cu ou Ni-phtalocyanine, qui peut comporter des substituants habituels,
B est une liaison directe ou un groupe de pontage sur un atome de carbone d'un noyau aromatique carbocyclique ou aromatique hétérocyclique dans Ar,
n = 1–4,
m = 1 ou 2,
R est H ou un groupe alkyle en $C_1$–$C_4$
en milieu aqueux, aqueux-organique ou organique avec m mol d'un composant réactif de formule
$R_1$-X (II)
dans laquelle
X est un halogène, en particulier F, Cl ou Br et
$R_1$ est un reste hétérocyclique réactif sur la fibre,
à des pH de 2 à 12, de préférence 4 à 10, avec utilisation de quantités équimolaires d'agents accepteurs d'acides, caractérisé en ce qu'au moins m/2-m mol de l'agent accepteur d'acides sont sous forme d'une zéolithe et/ou d'un échangeur d'anions organiques.

2. Procédé selon la revendication 1, caractérisé en ce que l'on utilise comme composants réactifs hétérocycliques (II) des pyrimidines fluorées ou des triazines fluorées.

3. Procédé selon les revendicaitons 1 et 2, caractérisé en ce que l'on utilise en outre comme agents accepteurs d'acides des composés basiques de lithium.

4. Fabrication de solutions aqueuses contenant 8–40% en poids de composé (I) par le procédé selon les revendications 1 à 3.